# FASCICULE DE BREVET EUROPEEN

(11) **EP 2 720 836 B1**
(45) Date de publication et mention de la délivrance du brevet: **11.05.2016**
(21) Numéro de dépôt: 12730427.7
(22) Date de dépôt: 11.06.2012
(51) Int. Cl.: B25J 9/16, B62D 57/032, G06T 13/80, B25J 13/00

(54) **PROCÉDÉ DE GÉNÉRATION D'ORDRES DE COMMANDE DE COORDINATION D'ORGANES DE DÉPLACEMENT D'UNE PLATEFORME ANIMÉE ET GÉNÉRATEUR CORRESPONDANT**
VERFAHREN ZUR ERZEUGUNG VON BEFEHLEN ZUR STEUERUNG DER KOORDINATION VON VERSCHIEBUNGSELEMENTEN EINER BEWEGLICHEN PLATTFORM UND ENTSPRECHENDER GENERATOR
METHOD OF GENERATING COMMANDS FOR CONTROLLING COORDINATION OF DISPLACEMENT MEMBERS OF A MOVING PLATFORM AND CORRESPONDING GENERATOR

(30) Priorité: 17.06.2011 FR 1155348
(43) Date de publication de la demande: 23.04.2014
(73) Titulaire: INRIA - Institut National de Recherche en Informatique et en Automatique, 78150 Le Chesnay (FR); Centre National de la Recherche Scientifique (CNRS), 75016 Paris (FR); MUSEUM NATIONAL D'HISTOIRE NATURELLE, 75005 Paris (FR); Université de Versailles Saint-Quentin-en-Yvelines, 78035 Versailles Cédex (FR)
(72) Inventeur: ABOURACHID, Anick, F-91210 Draveil (FR); MAES, Ludovic, F-27260 Epaignes (FR); REVERET, Lionel, F-38500 La Buisse (FR); HUGEL, Vincent, F-91399 Massy (FR)
(74) Mandataire: Cabinet Netter
(86) Numéro de dépôt international: PCT/EP2012/060999
(87) Numéro de publication internationale: WO 2012/171874

(56) Documents cités:
- US-A1- 2007 156 283

## Description

La présente invention concerne un procédé de génération d'ordres de commande de coordination d'organes de déplacement d'une plateforme animée, pour faire évoluer ladite plateforme animée entre une vitesse initiale et une vitesse finale selon au moins deux situations locomotrices.

L'invention concerne également un générateur correspondant et trouve une application privilégiée dans les domaines de l'imagerie de synthèse et de la robotique.

On connaît dans l'état de la technique divers exemples de modèles d'imagerie de synthèse ou de robots, appelés plus généralement plateformes animées, ayant une pluralité d'organes de déplacement ou membres, comme par exemple des plateformes bipèdes, quadrupèdes ou hexapodes.

En général, les plateformes animées de l'état de la technique sont construites de manière à accélérer ou à décélérer entre une vitesse de déplacement initiale et une vitesse de déplacement finale sans changer d'allure de déplacement, donc en conservant un même type de coordination entre les organes de déplacement.

Les transitions d'allure de déplacement, par exemple le passage de la marche au trot pour une plateforme quadrupède, impliquent des changements de caractéristiques de coordination entre les organes de déplacement de la plateforme animée. Néanmoins, les plateformes animées connues de l'état de la technique ne présentent pas la capacité d'effectuer des changements d'allure de déplacement de manière fluide et stable.

En particulier, les robots connus de l'état de la technique tel que décrit dans le document US-A1-2007/0 156 283 passent par un arrêt et une reprise dans une nouvelle allure de déplacement en cas de demande de changement d'allure de déplacement, ou réalisent un enchaînement brutal sans transition d'allure.

D'une manière générale, les plateformes animées de l'état de la technique ne sont pas aptes à gérer de manière stable et fluide les changements de situations locomotrices, les situations locomotrices incluant les allures de déplacement et les transitions d'allures.

Il est donc souhaitable de remédier aux inconvénients de l'état de la technique, en permettant un déplacement fluide et stable d'une plateforme animée, notamment en situation de transition d'allure de déplacement.

A cet effet, l'invention propose un procédé de génération d'ordres de commande de coordination d'organes de déplacement d'une plateforme animée, pour faire évoluer ladite plateforme animée entre une vitesse initiale et une vitesse finale selon au moins deux situations locomotrices. Le procédé est caractérisé en ce que :
- chaque situation locomotrice est associée à un module élémentaire correspondant de génération d'ordres de commande de coordination entre une vitesse de début de module prédéterminée et une vitesse de fin de module prédéterminée, et
- des domaines d'application de ces modules élémentaires sont représentés sous la forme d'une cartographie prédéterminée d'enchaînement de modules accolés couvrant au moins partiellement, par juxtaposition de leurs vitesses de début et de fin, le spectre des vitesses initiale et finale possibles de déplacement de la plateforme, de façon à permettre la détermination d'une suite de modules élémentaires à enchaîner pour passer de la vitesse initiale à la vitesse finale et la concaténation des modules de cette suite pour en tirer une suite d'ordres de commande correspondants des organes de déplacement de la plateforme animée.

Avantageusement, le procédé de génération d'ordres de commande de coordination d'organes de déplacement selon l'invention permet d'obtenir un déplacement fluide et stable d'une plateforme animée pour toute évolution de situation locomotrice, et notamment en situation de transition d'allure, grâce à l'utilisation d'une cartographie d'enchaînement. Ainsi, l'invention permet en particulier de faire évoluer une plateforme animée dans un environnement changeant, avec par exemple des dénivelés et des obstacles.

Le procédé de génération d'ordres de commande de coordination de déplacement selon l'invention peut présenter une ou plusieurs des caractéristiques ci-dessous :
- la plateforme animée est un modèle animé d'imagerie de synthèse,
- la plateforme animée est un robot,
- les modules élémentaires et ladite cartographie prédéterminée d'enchaînement des modules sont obtenus par modélisation de situations locomotrices à partir d'observations de déplacements d'un être vivant,
- l'être vivant est un bipède et en ce que les situations locomotrices comprennent le démarrage, l'arrêt, la marche et au moins un mode de course,
- l'être vivant est un quadrupède et en ce que les situations locomotrices comprennent le démarrage, l'arrêt, le trot, au moins un type de marche et au moins un type de galop,
- la plage de variation de vitesses de début et de fin de module est comprise entre 15% et 25% de la vitesse maximale possible de déplacement de la plateforme,
- les situations locomotrices incluent au moins deux allures de déplacement différentes et au moins une transition d'allure, ladite plateforme animée évoluant entre la vitesse initiale et la vitesse finale selon au moins deux allures de déplacement différentes en passant par une transition d'allure,
- chaque module élémentaire délivre des séquences de coordonnées de contact de ces organes de déplacement avec une surface de pose, dans un référentiel spatial et dans un référentiel temporel,
- lors de la concaténation des modules élémentaires, l'un desdits organes de déplacement est sélectionné comme référence, et en ce que ses coordonnées de contact spatiales et temporelles sont utilisées pour déterminer les origines spatiales et temporelles en entrée du module élémentaire suivant de la suite de modules élémentaires déterminée.

Selon un autre aspect, l'invention a également pour objet un générateur correspondant.

D'autres caractéristiques et avantages de l'invention ressortiront de la description qui en est donnée ci-dessous, à titre indicatif et nullement limitatif, en référence aux figures annexées, parmi lesquelles :
- la figure 1 est un schéma illustratif d'une application de l'invention ;

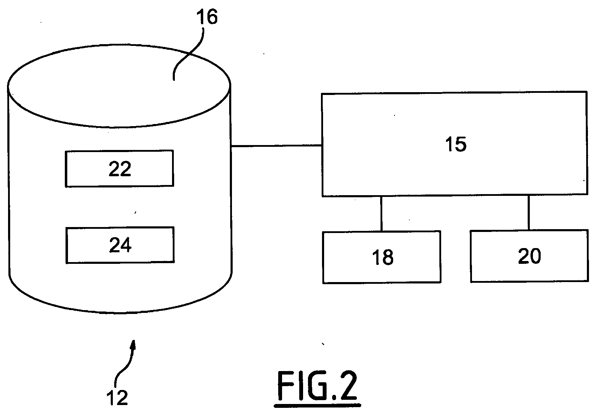

- la figure 2 est une vue schématique d'un dispositif générateur d'ordres de commande de coordination de déplacement selon l'invention ;
- la figure 3 est un organigramme d'un procédé de génération d'ordres de commande de coordination de déplacement selon un mode de réalisation de l'invention ;
- la figure 4 est un exemple de séquences de coordonnées de positionnement des organes de déplacement d'un quadrupède dans un référentiel spatial et un référentiel temporel ;
- la figure 5 est un exemple de cartographie d'enchaînement selon un mode de réalisation de l'invention ;
- la figure 6 illustre un exemple d'utilisation de la cartographie d'enchaînement de la figure 5 ;
- la figure 7 est un organigramme d'un procédé de détermination d'une suite de modules de déplacement selon un mode de réalisation de l'invention, et
- la figure 8 est un organigramme d'un procédé de concaténation de modules de déplacement selon l'invention.

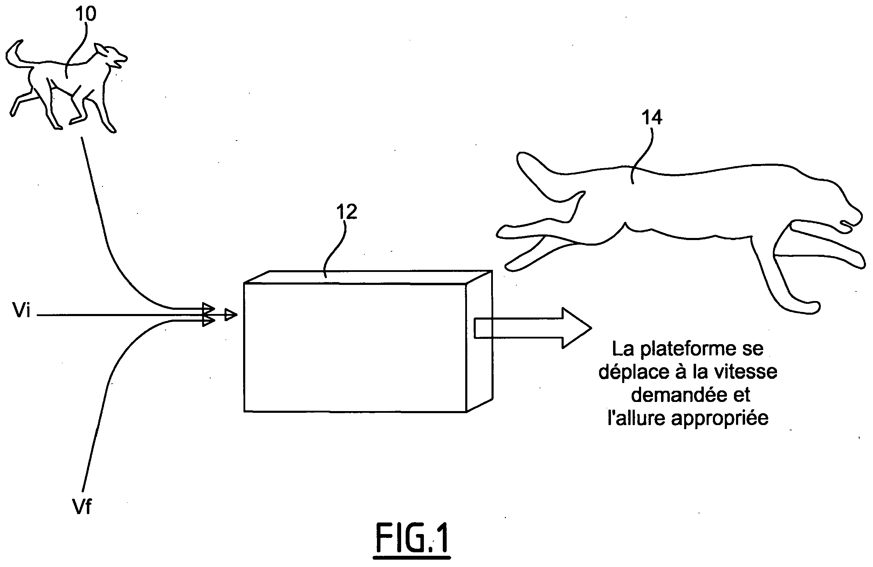

L'invention sera décrite dans le cas particulier de la génération d'ordres de commande de coordination d'organes de déplacement d'une plateforme animée de type quadrupède, telle que représentée à la figure 1. Plus particulièrement, les organes de déplacement sont les membres ou pattes du quadrupède.

Des données morphologiques du quadrupède 10 à animer, comme par exemple la hauteur de hanche et la longueur du tronc, ainsi que la vitesse initiale de déplacement et la vitesse finale de déplacement, sont fournies en entrée d'un dispositif générateur d'ordres de commande de coordination de déplacement 12 comprenant un module logiciel apte à mettre en oeuvre le procédé de l'invention. En sortie, les ordres de commande de coordination de déplacement obtenus permettent d'animer la plateforme 14 à l'allure appropriée entre la vitesse initiale Vi et la vitesse finale Vf.

Le dispositif 12 est par exemple un ordinateur, comprenant notamment un processeur 15, apte à exécuter des instructions de programme informatique, des moyens de stockage 16, une interface homme-machine 18 apte à recevoir des données, par exemple des commandes d'un utilisateur, et des moyens d'affichage 20.

Les moyens de stockage 16 sont aptes à stocker un ou plusieurs fichiers 22 contenant des cartographies d'enchaînement et un module logiciel 24 comprenant un programme informatique apte à mettre en oeuvre le procédé de l'invention lorsqu'il est exécuté par le processeur 15.

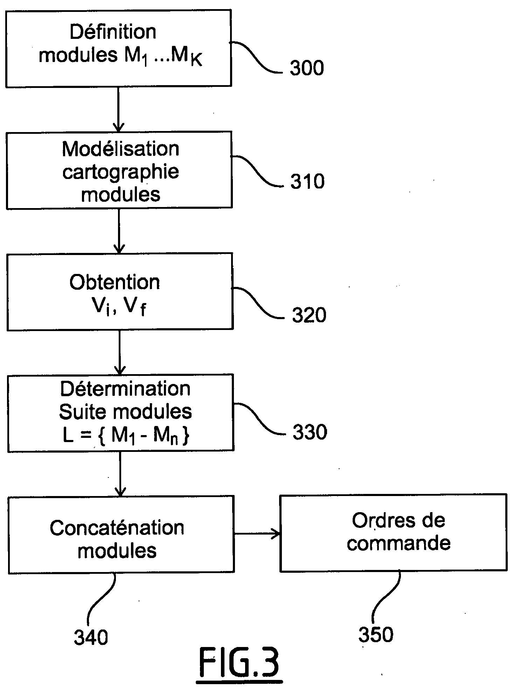

Un mode de réalisation du procédé de génération d'ordres de commande de coordination d'organes de déplacement est décrit dans l'organigramme de la figure 3.

Dans une première étape 300, des modules élémentaires de déplacement Mᵢ sont définis, chaque module élémentaire étant associé à une situation locomotrice, par exemple une allure de déplacement ou à une transition d'allure de déplacement. Une allure de déplacement correspond à un mode de coordination des membres de la plateforme animée de façon cyclique, répétée et stable. Une transition d'allure correspond à une évolution de la coordination des membres entre deux allures.

Chaque module génère des ordres de commande de coordination des membres de la plateforme animée entre une vitesse de début de module et une vitesse de fin de module données. De préférence, ces modules sont définis sur la base de modélisations d'observations de la locomotion d'êtres vivants.

Par exemple, en se référant à l'exemple schématique de la figure 1, on définit des modules élémentaires relatifs au déplacement d'un quadrupède par observation des allures de déplacement d'un chien.

Les situations locomotrices envisagées pour un quadrupède comprennent les allures suivantes : le démarrage, l'arrêt, le trot, plusieurs types de marche et plusieurs types de galop. En effet, des observations biologiques sur êtres vivants ont mis en évidence plusieurs types de marche et de galop. Par ailleurs, selon le type de quadrupède, d'autres allures ou situations locomotrices, telles que le toit, le bond ou le demi-bond, sont également envisagées. Les situations locomotrices envisagées comprennent également des transitions d'allure, notamment les transitions marche-trot ou trot-galop, selon les types de marche et de galop.

Dans un autre exemple de mise en oeuvre, pour un bipède, les situations locomotrices envisagées sont : démarrage, arrêt, les allures marche et plusieurs modes de course, comme par exemple la course classique et le sautillement et la transition d'allure entre la marche et un mode de course donné.

Dans un mode de réalisation, une modélisation en modules élémentaires de situations locomotrices adaptées à une plateforme animée représentant un être virtuel" par exemple un monstre d'animation ou de jeu vidéo, est obtenue par modification calculatoire des modules obtenus par observation biologique, en prenant en compte des données morphologiques de la plateforme animée.

Ensuite dans une étape 310, et de préférence également sur la base d'observations d'allures naturelles de déplacement d'un être vivant, une cartographie d'enchaînement de modules est définie. Cette cartographie permet de recouvrir le spectre des vitesses initiales et finales possibles pour la plateforme animée, définissant ainsi les domaines d'application des modules élémentaires définis.

De préférence, la cartographie d'enchaînement est normalisée, les vitesses initiale et finale étant représentées en fraction de la vitesse maximale possible (Vmax) pour la plateforme animée et variant respectivement entre 0 et 1.

Un exemple de cartographie d'enchaînement sera décrit en détail ci-après.

La cartographie d'enchaînement est mémorisée dans un fichier 22 stocké dans les moyens de stockage 16 du dispositif 12 mettant en oeuvre l'invention.

Pour une plateforme animée donnée 10, des vitesses de déplacement, respectivement une vitesse de déplacement initiale Vi et une vitesse de déplacement finale Vf normalisées sont obtenues à l'étape 320. Ces vitesses sont soit rentrées par un opérateur, soit fournies par un logiciel de contrôle de la plateforme animée.

En plus de la vitesse maximale Vmax de la plateforme animée, d'autres données morphologiques sont optionnellement fournies à l'étape 320, selon l'application.

Pour une plateforme animée donnée, en imagerie de synthèse ou en robotique, des paramètres tels que la hauteur de hanche et la longueur du tronc sont également fournis, afin de permettre une modélisation complète des mouvements des organes de déplacement par cinématique inverse.

Pour un modèle animé en imagerie de synthèse, l'ensemble des relations de coordination entre les organes de déplacement, qui sont les pattes dans le cas d'un quadrupède, pourra être calqué sur les modèles de déplacement obtenus par observation du vivant.

Lorsque la plateforme animée est un robot, d'autres contraintes sont à prendre en compte : articulations des membres de déplacement, élasticité, encombrement des pattes.

Les vitesses initiale et finale fournies sont ensuite utilisées avec la cartographie d'enchaînement des modules dans l'étape 330 pour déterminer une suite de modules élémentaires à enchaîner pour passer de la vitesse initiale Vi à la vitesse finale Vf, tout en garantissant la fluidité du déplacement de la plateforme animée.

Avantageusement, la ou les transitions d'allures à appliquer sont déterminées automatiquement par application de la cartographie d'enchaînement. L'étape de détermination d'une suite de modules élémentaires 330 à enchaîner fournit une liste L de modules élémentaires M₁ à Mₙ, ainsi qu'une vitesse de début de module et une vitesse de fin de module associées à l'application de chacun des modules. Les vitesses de début et de fin des modules à enchaîner sont également directement déterminées à partir de la cartographie d'enchaînement.

En pratique, il est suffisant de mémoriser les vitesses de fin de module de chaque module, la vitesse de début d'un module de l'enchaînement étant égale à la vitesse de fin de module du module précédent dans l'enchaînement.

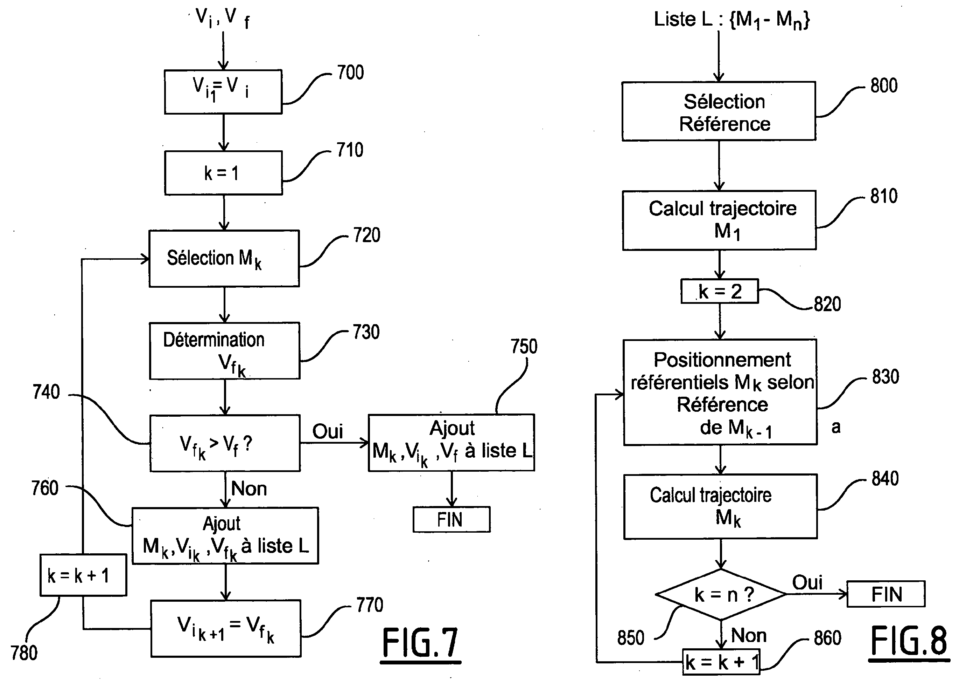

Ensuite, à l'étape 340 les modules élémentaires de déplacement sont concaténés pour obtenir une suite cohérente d'ordres de commande de coordination de déplacement des organes de déplacement de la plateforme animée entre la vitesse initiale Vi et la vitesse finale Vf. Un mode de réalisation de l'étape de concaténation des modules 340 sera décrit ci-après en référence à la figure 8.

Des ordres de commande de coordination de déplacement 350 sont finalement obtenus en application de l'étape 340. Dans un mode de réalisation ces ordres de commande de coordination 350 sont définis par des coordonnées spatiales et temporelles des contacts des extrémités des organes de déplacement avec une surface de pose, également appelés 'posers', dans un référentiel spatial et dans un référentiel temporel.

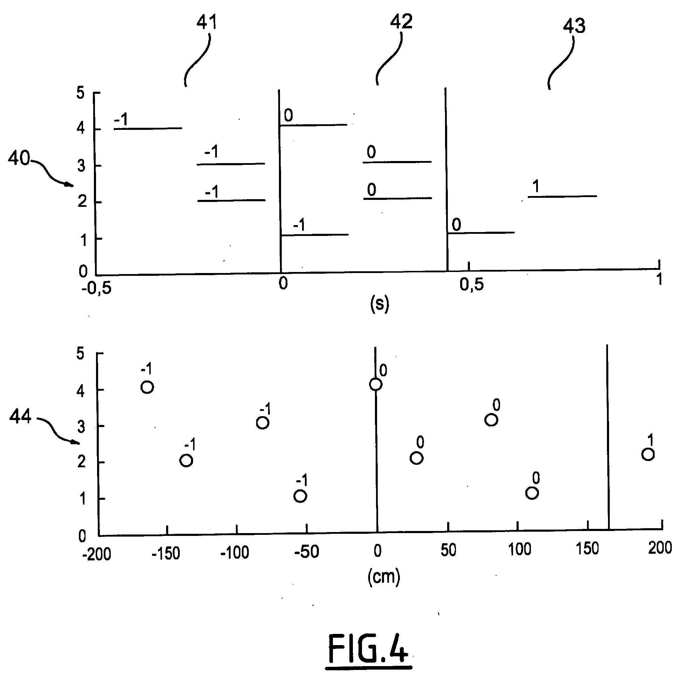

La figure 4 illustre un exemple de graphes de 'posers' de chacune des quatre pattes d'un quadrupède, dans un référentiel temporel d'une part, et dans un référentiel spatial d'autre part, dans le cas d'un déplacement en trot. Il est à noter que pour d'autres allures de déplacement, et d'autres vitesses de déplacement, l'ordre et la durée des 'posers' des membres seront différents.

Le référentiel spatial est dans le plan sagittal de la plateforme animée.Ces graphes modélisent le déplacement des organes de déplacement en une série de séquences antéropostérieures de mouvement ou APS, décrites dans l'article « A new way of analysing symmetrical and asymmetrical gaits in quadrupeds » de A. Abourachid, paru dans C. R. Biologies 326 (2003), pp. 625 - 630" qui se succèdent en se chevauchant dans le temps.

L'APS est une logique organisationnelle des coordinations des membres, différente de la seule logique temporelle. Une APS est l'association des cycles locomoteurs consécutifs des membres antérieurs, suivie des cycles locomoteurs consécutifs des membres postérieurs. Une APS débute avec le poser d'un membre antérieur de référence choisi et se termine à la fin du cycle locomoteur d'un membre postérieur.

Chaque APS définit des instants auxquels l'extrémité de chacun des membres, référencés par un numéro de référence associé, se pose sur la surface de pose puis se relève, ainsi que l'emplacement de l'endroit de pose dans un référentiel spatial.

Le graphe 40 comprend trois intervalles 41, 42 et 43 dans lesquels s'enchaînent les séquences APS d'indices respectifs -1, 0 et 1 dans un référentiel temporel. Les numéros de référence associés aux membres sont représentés en ordonnée, et les instants temporels en abscisse. Les membres sont numérotés de 1 à 4. L'axe temporel est centré sur le début de l'APS 0 et s'étend, dans cet exemple, de -0,5 secondes (s) à 1 s.

Comme on le voit sur le graphe 40, pour chaque séquence APS, c'est le membre dont le numéro associé est le numéro 4 qui se pose en premier et qui est choisi comme membre de référence, ou plus généralement organe de déplacement de référence, pour chacune des séquences APS. Ensuite les membres numéros 2 et 3 se posent en même temps, et finalement le membre numéro 1 se pose, alors que les membres numéros 2 et 3 sont levés. On constate que le membre numéro 1 de la séquence APS -1 se pose en même temps que le membre numéro 4 de la séquence APS 0, dans l'intervalle 42, ce qui illustre le chevauchement temporel de séquences APS modélisant la coordination de mouvement des membres d'un quadrupède dans cet exemple.

En parallèle, le graphe 44 illustre les coordonnées spatiales des 'posers' de membres, donc de contact des membres avec la surface de pose dans un référentiel spatial, centré également sur le début de l'APS 0. L'axe des ordonnées du graphe 44 représente les numéros de référence associés aux membres alors que l'axe des abscisses représente le positionnement spatial unidimensionnel autour de l'origine du repère spatial, entre -200cm et 200cm dans cet exemple. En effet, pour simplifier la représentation, on considère que le quadrupède se déplace selon une direction donnée, et donc les coordonnées de positionnement spatial sont à une dimension dans le plan sagittal.

Dans le graphe 44 sont représentées les coordonnées spatiales des séquences APS d'indices respectifs -1, 0 et 1 dont les coordonnées temporelles correspondantes sont données dans le graphe 40. Ainsi par exemple le membre numéro 4 de la séquence APS 0 se pose à la position de coordonnée spatiale 0cm pendant 0,2s entre l'instant temporel 0s et l'instant temporel 0,2s. Il est à noter ici que la durée de 0,2s est spécifique à une vitesse de déplacement donnée.

Dans le mode de réalisation préféré de l'invention, chaque module élémentaire de déplacement modélise une succession de séquences APS, en fonction des paramètres de vitesse de début de module et de vitesse de fin de module.

Les modules élémentaires associés à une allure constante de déplacement comprennent une succession de séquences APS similaires, donc qui représentent des coordinations des organes de déplacement similaires, les coordonnées spatiales et temporelles des instants de contact variant selon l'évolution entre la vitesse de début de module et la vitesse de fin de module.

Les modules élémentaires associés à une transition d'allure de déplacement ou aux situations locomotrices de démarrage et d'arrêt comprennent une succession de différentes séquences APS correspondant à différentes coordinations des organes de déplacement, de manière à modéliser la transition entre une allure de déplacement initiale et une allure de déplacement finale, en plus de la prise en compte des vitesses respectives de début et de fin de module.

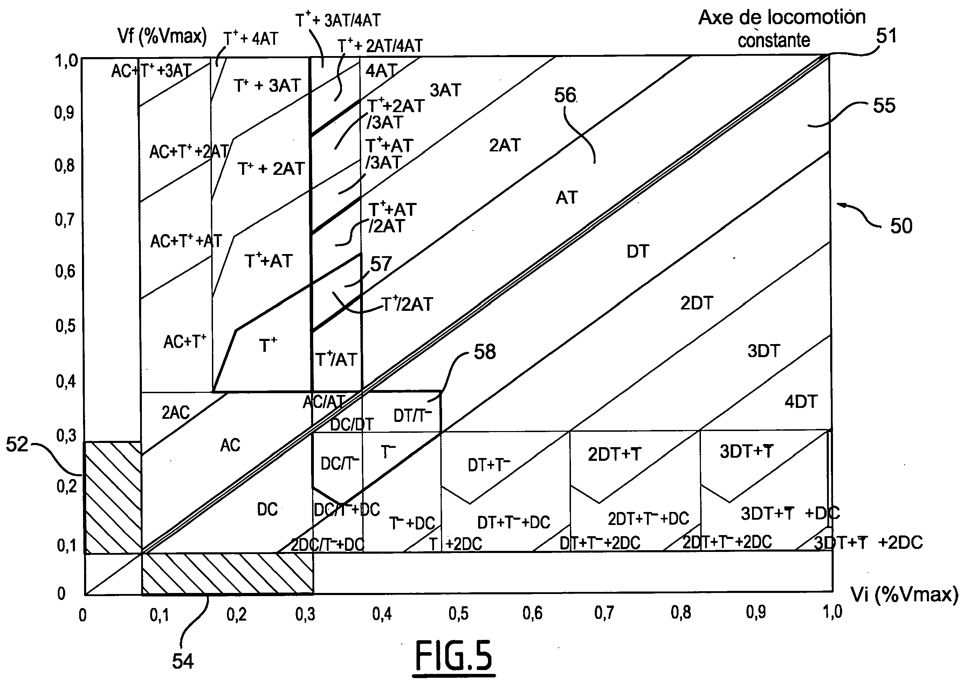

Le nombre de séquences APS décrites dans un module élémentaire de déplacement dépend du type d'allure, typiquement 3 séquences APS numérotées par exemple -1,0 et 1 pour un module élémentaire associé à une allure constante de déplacement comme dans l'exemple de la figure 4, et 5 séquences APS, numérotées par exemple de -2 à 2 pour un module élémentaire de déplacement associé à une transition d'allure de déplacement.

La première et la dernière des séquences APS de chaque module sont des prédictions des 'posers' des membres respectivement du module précédent et du module suivant dans l'enchaînement en supposant que ces modules sont associés à un déplacement à locomotion constante.

La figure 5 illustre une cartographie d'enchaînement de modules élémentaires 50 correspondant à différentes situations locomotrices choisies pour un quadrupède, obtenue par observation des déplacements d'un chien berger. Les axes correspondent respectivement à la vitesse initiale normalisée en fraction de la vitesse maximale Vmax pour l'axe horizontal et à la vitesse finale normalisée en fraction de la vitesse maximale Vmax pour l'axe vertical.

La diagonale principale 51 représente l'axe de locomotion constante, sur lequel les vitesses initiale et finale sont égales, et sépare la cartographie 50 en deux parties, la partie supérieure dédiée à l'accélération et la partie inférieure dédiée à la décélération.

Un module de démarrage 52 avec une vitesse de début nulle et une vitesse de fin comprise entre 0,1Vmax et 0,3Vmax, et un module d'arrêt 54 avec une vitesse de début comprise entre 0,1Vmax et 0,3Vmax et une vitesse de fin nulle sont représentés. Ces modules sont utilisés pour ces situations particulières de démarrage et d'arrêt. Les observations biologiques ont montré que la variation entre 0 et 0,1Vmax ne correspond à aucune allure de type marche, trot ou autre. Il s'agit d'un mode de déplacement de type pointage dans lequel l'animal place un pied puis un autre sans synchronisation temporelle particulière.

Des modules d'allure constante de décélération 55 et d'accélération 56, ainsi que des modules de transition d'allure 57, 58 sont représentés sur la cartographie 50, certains se superposant tels les modules 56 et 57 pour former une cartographie complète des domaines d'application des divers modules élémentaires de déplacement.

Les vitesses de déplacement supérieures à environ 0,3Vmax correspondent à l'allure 'trot', mais il existe une zone de chevauchement entre la marche et le trot, située entre 0,3Vmax et 0,4Vmax.

Ainsi tous les modules situés au-dessus de la diagonale principale 51 notés AT, 2AT, 3AT, 4AT correspondent à des accélérations dans l'allure trot. Pour chaque module élémentaire d'accélération trot, la variation de vitesse entre la vitesse de début de module et la vitesse de fin de module est bornée, typiquement comprise dans une fourchette d'augmentation de la vitesse de début de module d'un maximum de 15% à 25% de la vitesse maximale Vmax, ce qui assure le réalisme et la stabilité de la locomotion.

Les modules notés DT, 2DT, 3DT, 4DT correspondent chacun à des décélérations en trot, également plafonnées entre la vitesse de début de module et la vitesse de fin de module. Par exemple, le module 2DT correspond à l'application deux fois du module de décélération en trot DT.

Les vitesses de déplacement inférieures à environ 0,38Vmax correspondent à l'allure de déplacement 'marche', également dénommée 'crawl' ou 'walk' en anglais. Ainsi, les modules notés AC, 2AC correspondent à l'accélération en marche, et les modules DC, 2DC correspondent à la décélération en marche. Il est à noter ici que les valeurs numériques et la forme des modules notés sur la cartographie dépendent du modèle animal observé pour générer la cartographie.

Les modules notés T⁺ et T⁻, respectivement les modules 57 et 58 de la figure 5, sont des modules de transition d'allure, en accélération pour le module T⁺ et en décélération pour le module T⁻.

On constate sur la cartographie d'enchaînement 50 qu'il y a une superposition entre les zones d'allure 'marche' et 'trot' dans une fourchette de vitesses comprises entre 0,3Vmax et 0,38Vmax, c'est-à-dire que la plateforme animée peut se déplacer dans l'une ou l'autre de ces allures dans cette fourchette de vitesse sans perdre en réalisme de mouvement.

Le choix de l'une ou l'autre des allures pourra se faire soit par un opérateur, soit en tenant compte du type d'allure de déplacement préalable dans un enchaînement de modules élémentaires de déplacement.

Les modules de transition d'allure 57 et 58 se superposent à des modules d'accélération et de décélération à allure constante. De préférence, dans la zone de vitesses correspondant aux transitions d'allure, ces transitions d'allure sont appliquées en priorité par rapport aux modules correspondant à une allure constante.

Les formes des domaines d'application des divers modules élémentaires représentés sur la cartographie 50 sont déterminées suite à des observations de déplacement d'un quadrupède vivant. Avantageusement, la modélisation sous forme de cartographie 50 des observations biologiques assure une modélisation réaliste et naturelle des transitions d'allure de locomotion.

De manière générale, une telle cartographie 50 représentant les domaines d'application des modules élémentaires est générée selon la plateforme animée.

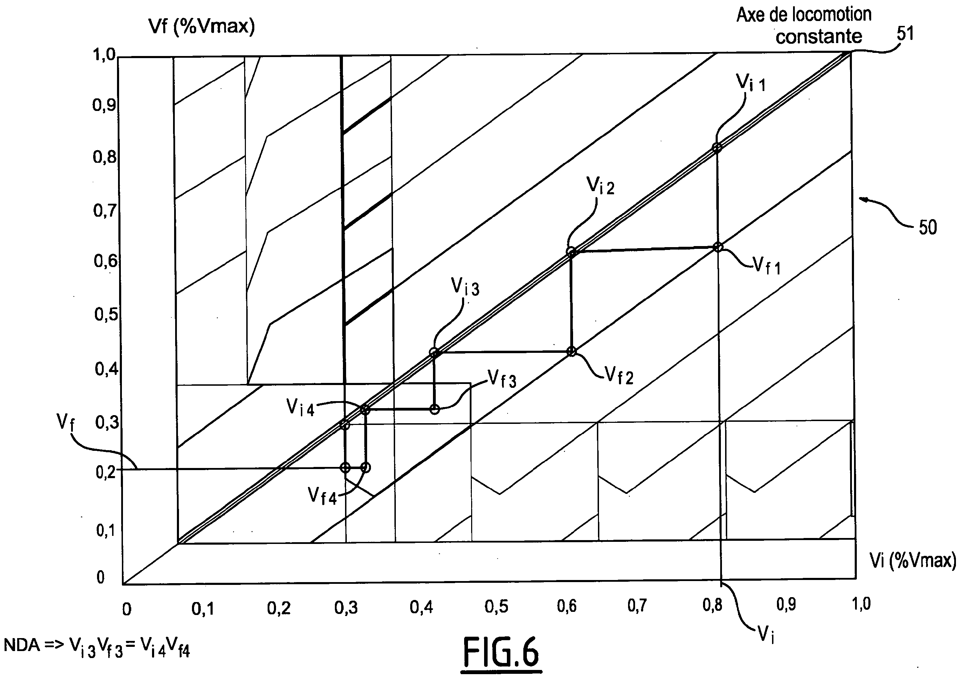

Un exemple d'utilisation de la cartographie d'enchaînement 50 pour déterminer une suite de modules élémentaires à enchaîner pour passer d'une vitesse initiale de Vi=0,79Vmax à une vitesse finale de Vf=0,21 Vmax est illustré à la figure 6.

On cherche ici à atteindre une vitesse finale inférieure à la vitesse initiale, il s'agit donc d'une décélération.

Le point Vi₁ correspondant à la vitesse initiale Vi est représenté sur l'axe de locomotion constante 51. La vitesse de début de module Vi₁ du premier module à appliquer est initialisée à la vitesse initiale Vi.

Le point initial Vi₁ se situe dans une zone d'allure 'trot'. On applique comme premier module M₁ le module de décélération trot (DT) entre Vi₁=0,79Vmax et Vf₁=0,61 Vmax, qui est la vitesse minimale qu'on peut obtenir.en application du module DT en partant de la vitesse de début de module Vi₁=0,79Vmax, et qui correspond à une décélération de 0,18Vmax, soit 18% de la vitesse maximale de la plateforme animée.

La vitesse de fin du module M₁ est utilisée comme vitesse de début de module du module suivant M₂ : Vi₂=0,61Vmax. Le point correspondant Vi₂ est placé sur i'axe de locomotion constante 51. Le module permettant une décélération supplémentaire est à nouveau le module de décélération trot, donc le module M₂ est également le module DT, entre Vi₂=0,61Vmax et Vf₂=0,43Vmax.

La vitesse de fin du module M₂ est utilisée comme vitesse de début de module du module suivant M₃: Vi₃=Vf₂. Selon la cartographie 50, partant de la vitesse initiale Vi₃=0,43Vmax, on passe dans le module de transition T⁻ jusqu'à la vitesse finale Vf₃=0,32Vmax. La vitesse Vf₃ correspond dans cet exemple à (Vf₂+Vf)/2, afin d'homogénéiser la décélération entre Vf₂ et Vf. D'autres choix pour Vf₃ dans la limite de la frontière définie par la cartographie 50 sont possibles.

Ensuite, en prenant la vitesse de fin du module de transition Vf₃ comme vitesse de début de module du module suivant M₄, Vi₄=Vf₃=0,32Vmax, on applique selon la cartographie 50 un module de décélération en marche (DC). Ce module de décélération en marche est appliqué uniquement jusqu'à la vitesse finale, donc la vitesse de fin de module Vf₄=Vf=0,21Vmax.

L'organigramme de la figure 7 représente les principales étapes du procédé de détermination d'une suite de modules élémentaires à enchaîner utilisant une cartographie des modules élémentaires selon l'invention. Cet organigramme détaille une mise en oeuvre de l'étape 340 de la figure 3.

En entrée, on reçoit les valeurs des paramètres vitesse initiale Vi et vitesse finale Vf. A l'étape 700, la vitesse de début de module Vi₁ du premier module élémentaire de déplacement est initialisée à la valeur Vi. A l'étape 710, une variable k, représentant le module élémentaire à appliquer, est initialisée à 1.

Ensuite, à l'aide de la cartographie d'enchaînement des modules de déplacement 50, et selon qu'il s'agit d'une accélération ou d'une décélération, ce qui est déterminé par comparaison entre la vitesse initiale et la vitesse finale, un module élémentaire Mₖ est sélectionné à l'étape 720 dans la cartographie d'enchaînement de modules de déplacement 50.

La vitesse de fin de module du module Mₖ, Vfₖ, atteignable par application du module de déplacement Mₖ à partir de la vitesse de début de module Viₖ est déterminée à l'étape 730. En pratique, cette vitesse Vfₖ peut être lue directement à partir de la cartographie d'enchaînement 50.

A l'étape suivante 740 il est vérifié si la vitesse Vfₖ est supérieure ou égale à la vitesse finale attendue Vf, afin de déterminer si l'application du module Mₖ permet d'atteindre la vitesse finale Vf. En cas de réponse positive, le module Mₖ, ainsi que ses vitesses d'application de début Viₖ et de fin Vf sont mémorisées à l'étape 750 dans la liste L des modules à enchaîner. Le procédé prend fin, puisque le dernier module sélectionné permet d'atteindre la vitesse finale Vf.

En cas de réponse négative au test 740, donc si la vitesse finale Vf n'est pas encore atteinte, le module Mₖ est ajouté à la liste L mémorisant la suite des modules à appliquer à l'étape 760, avec les vitesses de début Viₖ et de fin Vfₖ associées pour son application.

Ensuite à l'étape 770, la vitesse de début de module, Viₖ₊₁, du module suivant à appliquer, Mₖ₊₁, prend la valeur de la vitesse de fin du module courant Mₖ : Viₖ₊ᵢ=Vfₖ, et la variable k est augmentée de un à l'étape 780.

L'étape de sélection d'un module élémentaire de déplacement 720 déjà décrite est alors à nouveau appliquée.

Ainsi, on obtient finalement une suite de modules à enchaîner, chacun entre une vitesse de début de module et une vitesse de fin de module, permettant d'obtenir un déplacement fluide en allures et en vitesses entre la vitesse initiale Vi et la vitesse finale Vf.

L'organigramme de la figure 8 représente les principales étapes d'un procédé de concaténation de la suite de modules élémentaires obtenue pour générer des ordres de commande de coordination d'organes de déplacement selon l'invention. Cet organigramme détaille une mise en oeuvre de l'étape 340 de la figure 3, dans un mode de réalisation dans lequel les ordres de commande sont donnés par des positionnements des organes de déplacement dans un référentiel spatial d'une part et dans un référentiel temporel d'autre part.

La suite des modules de déplacement élémentaires à enchaîner obtenue précédemment est fournie en entrée du procédé sous forme d'une liste L de modules à appliquer, et des vitesses associées.

Lors d'une première étape 800, un des organes de déplacement est sélectionné comme organe de déplacement de référence pour la concaténation des modules. Le membre numéro 4 d'un quadrupède, qui est le membre antérieur droit dans cet exemple, qui est déjà utilisé comme organe de déplacement de référence dans la représentation en séquences APS, est sélectionné comme organe de déplacement de référence.

Ensuite à l'étape 810, l'ensemble des ordres de commande de coordination issus du premier module de déplacement M₁, en fonction de la vitesse de début de module Vi₁ et la vitesse de fin de module Vfᵢ sont extraits. Dans cet exemple, il s'agit d'une trajectoire exprimée en coordonnées spatiales et coordonnées temporelles des 'posers' de chacun des membres du quadrupède.

Ensuite à l'étape 820 une variable k est initialisée à la valeur 2.

Le module de déplacement suivant à appliquer est le module Mₖ de la liste L. A l'étape suivante 830, les référentiels spatial et temporel du module Mₖ sont positionnés par rapport aux coordonnées spatiales et temporelles de l'organe de déplacement de référence à la fin du module Mₖ₋₁. Comme expliqué précédemment, la dernière séquence APS d'un module est une prédiction des 'posers' des membres d'un module suivant. Lors de la concaténation, la validité de cette prédiction est vérifiée et ajustée si nécessaire.

Ainsi il est possible d'enchaîner les positionnements spatiaux et temporels des organes de déplacement de manière continue, la dernière séquence APS d'un module s'emboîtant dans le module suivant. Avantageusement, cela permet d'obtenir la stabilité et la fluidité du déplacement locomoteur.

Le positionnement des référentiels spatial et temporel de Mₖ permet ensuite de calculer la trajectoire de 'posers' de l'ensemble des membres dans le module Mₖ, c'est-à-dire l'ensemble des coordonnées spatiales et temporelles de 'poser' de chacun des organes de déplacement.

A l'étape suivante 850 il est vérifié si la variable k a atteint la valeur n, indice du dernier module dans la suite de modules à enchaîner. En cas de réponse positive, le procédé prend fin.

En cas de réponse négative, la variable k est augmentée de un à l'étape 860 et l'étape 830 et les suivantes sont à nouveau exécutées.

Ainsi, un ensemble de coordonnées de 'posers' des pattes sont issues de ce procédé, cet ensemble représentant des ordres de commande des organes de déplacement d'une plateforme animée dans ce mode de réalisation.

Les trajectoires complètes des extrémités des membres, permettant d'atteindre les coordonnées spatiales des contacts avec la surface de pose calculées, sont obtenues en utilisant un modèle prédéterminé de trajectoire, puis l'ensemble des mouvements des membres, incluant l'ensemble des articulations, est calculé par cinématique inverse en intégrant les coordonnées spatiales des contacts avec la surface de pose calculées, la position du centre de masse de la plateforme animée à chaque instant et la morphologie de la plateforme.

## Revendications

1. Procédé de génération d'ordres de commande de coordination d'organes de déplacement d'une plateforme animée (14), pour faire évoluer ladite plateforme animée entre une vitesse initiale (Vi) et une vitesse finale (Vf) selon au moins deux situations locomotrices, **caractérisé en ce que** :
- chaque situation locomotrice est associée à un module élémentaire (Mₖ) correspondant de génération d'ordres de commande de coordination entre une vitesse de début de module prédéterminée et une vitesse de fin de module prédéterminée, et
- des domaines d'application de ces modules élémentaires sont représentés sous la forme d'une cartographie prédéterminée d'enchaînement de modules (50) accolés couvrant au moins partiellement, par juxtaposition de leurs vitesses de début et de fin, le spectre des vitesses initiale et finale possibles de déplacement de la plateforme,
de façon à permettre la détermination (330) d'une suite de modules élémentaires à enchaîner pour passer de la vitesse initiale (Vi) à la vitesse finale (Vf) et la concaténation (340) des modules de cette suite pour en tirer une suite d'ordres de commande (350) correspondants des organes de déplacement de la plateforme animée (14).

2. Procédé de génération d'ordres de commande de coordination de déplacement selon la revendication 1, **caractérisé en ce que** ladite plateforme animée (14) est un modèle animé d'imagerie de synthèse.

3. Procédé de génération d'ordres de commande de coordination de déplacement selon la revendication 1, **caractérisé en ce que** ladite plateforme animée (14) est un robot.

4. Procédé de génération d'ordres de commande de coordination de déplacement selon l'une quelconque des revendications 1 à 3, **caractérisé en ce que** lesdits modules élémentaires (Mₖ) et ladite cartographie prédéterminée d'enchaînement des modules (50) sont obtenus par modélisation de situations locomotrices à partir d'observations de déplacements d'un être vivant.

5. Procédé de génération d'ordres de commande de coordination de déplacement selon la revendication 4, **caractérisé en ce que** l'être vivant est un bipède et **en ce que** les situations locomotrices comprennent le démarrage, l'arrêt, la marche et au moins un mode de course.

6. Procédé de génération d'ordres de commande de coordination de déplacement selon la revendication 4, **caractérisé en ce que** l'être vivant est un quadrupède et **en ce que** les situations locomotrices comprennent le démarrage, l'arrêt, le trot, au moins un type de marche et au moins un type de galop.

7. Procédé de génération d'ordres de commande de coordination de déplacement selon l'une quelconque des revendications précédentes, **caractérisé en ce que** la plage de variation de vitesses de début et de fin de module est comprise entre 15% et 25% de la vitesse maximale possible (Vmax) de déplacement de la plateforme.

8. Procédé de génération d'ordres de commande de coordination de déplacement selon l'une quelconque des revendications précédentes, **caractérisé en ce que** lesdites situations locomotrices incluent au moins deux allures de déplacement différentes et au moins une transition d'allure, ladite plateforme animée (14) évoluant entre la vitesse initiale (Vi) et la vitesse finale (Vf) selon au moins deux allures de déplacement différentes en passant par une transition d'allure.

9. Procédé de génération d'ordres de commande de coordination de déplacement selon l'une quelconque des revendications précédentes, **caractérisé en ce que** chaque module élémentaire délivre des séquences de coordonnées de contact de ces organes de déplacement avec une surface de pose, dans un référentiel spatial (44) et dans un référentiel temporel (40).

10. Procédé de génération d'ordres de commande de coordination de déplacement selon la revendication 9, **caractérisé en ce que** lors de la concaténation des modules élémentaires, l'un desdits organes de déplacement est sélectionné (800) comme référence, et **en ce que** ses coordonnées de contact spatiales et temporelles sont utilisées (830) pour déterminer les origines spatiales et temporelles en entrée du module élémentaire suivant de la suite de modules élémentaires déterminée.

11. Générateur d'ordres de commande de coordination (12) d'organes de déplacement d'une plateforme animée, pour faire évoluer ladite plateforme animée entre une vitesse initiale (Vi) et une vitesse finale (Vf) selon au moins deux situations locomotrices, **caractérisé en ce qu'**il est adapté pour mettre en oeuvre un procédé selon l'une quelconque des revendications précédentes.

## Patentansprüche

1. Verfahren zum Generieren von Befehlen zur Steuerung der Koordination von Ortsveränderungselementen einer beweglichen Plattform (14), um die bewegliche Plattform entsprechend mindestens zweier Bewegungssituationen sich zwischen einer Ausgangsgeschwindigkeit (Vi) und einer Endgeschwindigkeit (Vf) bewegen zu lassen, **dadurch gekennzeichnet, dass**:
- jede Bewegungssituation mit einem entsprechenden Grundbaustein (Mₖ) zum Generieren von Befehlen zur Steuerung der Koordination zwischen einer vorbestimmten Bausteinanfangsgeschwindigkeit und einer vorbestimmten Bausteinendgeschwindigkeit assoziiert wird, und
- Anwendungsbereiche dieser Grundbausteine in Form einer vorbestimmten Verkettungskartografie aneinandergefügter Bausteine (50) dargestellt werden, die zumindest teilweise durch Gegenüberstellung von deren Anfangs- und Endgeschwindigkeiten das Spektrum der möglichen Ausgangs- und Endgeschwindigkeiten einer Ortsveränderung der Plattform abdeckt,
- und zwar auf eine Weise, dass die Bestimmung (330) einer Abfolge von zu verkettenden Grundbausteinen, um von der Ausgangsgeschwindigkeit (Vi) zur Endgeschwindigkeit (Vf) überzugehen, und die Verknüpfung (340) der Bausteine dieser Abfolge ermöglicht wird, um daraus eine Abfolge von entsprechenden Steuerbefehlen (350) für die Ortsveränderungselemente der beweglichen Plattform (14) abzuleiten.

2. Verfahren zum Generieren von Steuerbefehlen zur Ortsveränderungskoordination nach Anspruch 1, **dadurch gekennzeichnet, dass** die bewegliche Plattform (14) ein animiertes Synthesebildgebungsmodell ist.

3. Verfahren zum Generieren von Steuerbefehlen zur Ortsveränderungskoordination nach Anspruch 1, **dadurch gekennzeichnet, dass** die bewegliche Plattform (14) ein Roboter ist.

4. Verfahren zum Generieren von Steuerbefehlen zur Ortsveränderungskoordination nach einem der Ansprüche 1 bis 3, **dadurch gekennzeichnet, dass** die Grundbausteine (Mₖ) und die vorbestimmte Verkettungskartografie der Bausteine (50) durch modellhaftes Nachbilden von Bewegungssituationen aus Beobachtungen von Ortsveränderungen eines Lebewesens gewonnen werden.

5. Verfahren zum Generieren von Steuerbefehlen zur Ortsveränderungskoordination nach Anspruch 4, **dadurch gekennzeichnet, dass** das Lebewesen ein zweibeiniges Lebewesen ist, und dass die Bewegungssituationen das Losbewegen, das Anhalten, das Gehen und mindestens eine Laufart umfassen.

6. Verfahren zum Generieren von Steuerbefehlen zur Ortsveränderungskoordination nach Anspruch 4, **dadurch gekennzeichnet, dass** das Lebewesen ein vierbeiniges Lebewesen ist, und dass die Bewegungssituationen das Losbewegen, das Anhalten, das Trotten, mindestens eine Gangart und mindestens eine Galoppart umfassen.

7. Verfahren zum Generieren von Steuerbefehlen zur Ortsveränderungskoordination nach einem der vorhergehenden Ansprüche, **dadurch gekennzeichnet, dass** der Variationsbereich von Bausteinanfangs- und Bausteinendgeschwindigkeiten zwischen 15% und 25% der möglichen maximalen Ortsveränderungsgeschwindigkeit (Vmax) der Plattform beträgt.

8. Verfahren zum Generieren von Steuerbefehlen zur Ortsveränderungskoordination nach einem der vorhergehenden Ansprüche, **dadurch gekennzeichnet, dass** die Bewegungssituationen mindestens zwei verschiedene Ortsveränderungsverläufe und mindestens einen Verlaufsübergang umfassen, wobei sich die bewegliche Plattform (14) entsprechend mindestens zweier verschiedener Ortsverändungsverläufe, wobei sie einen Verlaufsübergang durchläuft, zwischen der Ausgangsgeschwindigkeit (Vi) und der Endgeschwindigkeit (Vf) bewegt.

9. Verfahren zum Generieren von Steuerbefehlen zur Ortsveränderungskoordination nach einem der vorhergehenden Ansprüche, **dadurch gekennzeichnet, dass** jeder Grundbaustein Sequenzen von Koordinaten eines Kontakts dieser Ortsveränderungselemente mit einer Standfläche in einem räumlichen Bezugssystem (44) und einem zeitlichen Bezugssystem (40) liefert.

10. Verfahren zum Generieren von Steuerbefehlen zur Ortsveränderungskoordination nach Anspruch 9, **dadurch gekennzeichnet, dass** bei der Verknüpfung der Grundbausteine eines der Ortsveränderungselemente als Bezug ausgewählt wird (800), und dass seine räumlichen und zeitlichen Kontaktkoordinaten dazu verwendet werden (830), die räumlichen und zeitlichen Ursprünge beim Wirksamwerden des nächsten Grundbausteins der vorbestimmten Grundbausteinabfolge zu bestimmen.

11. Generator von Steuerbefehlen zur Koordination (12) von Ortsveränderungselementen einer beweglichen Plattform, um die bewegliche Plattform sich entsprechend mindestens zweier Bewegungssituationen zwischen einer Ausgangsgeschwindigkeit (Vi) und einer Endgeschwindigkeit (Vf) bewegen zu lassen, **dadurch gekennzeichnet, dass** er dazu angepasst ist, ein Verfahren nach einem der vorhergehenden Ansprüche umzusetzen.

## Claims

1. A method for generating commands for controlling coordination of displacement members of a moving platform (14), in order to have said moving platform progress between an initial speed (Vi) and a final speed (Vf) according to at least two locomotive situations, **characterized in that**:
- each locomotive situation is associated with a corresponding elementary module (Mₖ) generating commands for controlling coordination between a predetermined module start speed and a predetermined module end speed, and
- application areas of these elementary modules are illustrated as a predetermined mapping of sequencing of adjoining modules (50) covering at least partially, by juxtaposition of their start and end speeds, the spectrum of possible initial and final speeds of displacement of the platform,
so as to allow determination (330) of a series of elementary modules to be strung to pass from the initial speed (Vi) to the final speed (Vf) and concatenation (340) of the modules of this series so as to derive therefrom a series of corresponding control commands (350) of the displacement members of the moving platform (14).

2. The method for generating commands controlling displacement coordination according to claim 1, **characterized in that** said moving platform (14) is a moving computer-generated imaging model.

3. The method for generating commands controlling displacement coordination according to claim 1, **characterized in that** said moving platform (14) is a robot.

4. The method for generating commands controlling displacement coordination according to any of claims 1 to 3 **characterized in that** said elementary modules (Mₖ) and said predetermined mapping of sequencing of the modules (50) are obtained by modeling locomotive situations from observations of displacements of a living being.

5. The method for generating commands controlling displacement coordination according to claim 4, **characterized in that** the living being is a biped and the locomotive situations comprise starting, stopping, walking and at least one running mode.

6. The method for generating commands controlling displacement coordination according to claim 4, **characterized in that** the living being is a quadruped and the locomotive situations comprise starting, stopping, trotting, at least one walking type and at least one galloping type.

7. The method for generating commands controlling displacement coordination according to any of the preceding claims, **characterized in that** the variation range of module start and end speeds is comprised between 15% and 25% of the maximum possible speed (Vmax) of displacement of the platform.

8. The method for generating commands controlling displacement coordination according to any of the preceding claims, **characterized in that** said locomotive situations include at least two different displacement gaits and at least one gait transition, said moving platform (14) progressing between the initial speed (Vi) and the final speed (Vf) according to at least two different displacement gaits while passing through a gait transition.

9. The method for generating commands controlling displacement coordination according to any of the preceding claims, **characterized in that** each elementary module delivers sequences of contact coordinates of these displacement members with a laying surface, in a space reference system (44) and a time reference system (40).

10. The method for generating commands controlling displacement coordination according to claim 9, **characterized in that** during concatenation of the elementary modules, one of said displacement members is selected (800) as a reference, and **in that** its space and time contact coordinates are used (830) for determining the space and time origins at the input of the next elementary module of the determined series of elementary modules.

11. A generator of commands for controlling coordination (12) of displacement members of a moving platform, so as to have said moving platform progress between an initial speed (Vi) and a final speed (Vf) according to at least two locomotive situations, **characterized in that** it is adapted for applying a method according to any of the preceding claims.
